# EUROPEAN PATENT SPECIFICATION

(11) **EP 3 310 078 B1**
(45) Date of publication and mention of the grant of the patent: **05.06.2019**
(21) Application number: 15909466.3
(22) Date of filing: 30.11.2015
(51) Int. Cl.: H04W 4/33

(54) **COMMUNICATION METHOD, SMALL CELL BASE STATION, SMALL CELL BASE STATION CONTROLLER, TERMINAL AND SYSTEM**
KOMMUNIKATIONSVERFAHREN, KLEINZELLIGE BASISSTATION, STEUERGERÄT EINER KLEINZELLIGEN BASISSTATION, ENDGERÄT UND SYSTEM
PROCÉDÉ DE COMMUNICATION, STATION DE BASE PETITE CELLULE, CONTRÔLEUR DE STATION DE BASE PETITE CELLULE, TERMINAL, ET SYSTÈME

(43) Date of publication of application: 18.04.2018
(73) Proprietor: Huawei Technologies Co., Ltd., Longgang District Shenzhen, Guangdong 518129 (CN)
(72) Inventor: QI, Jiang, Shenzhen Guangdong 518129 (CN)
(74) Representative: Pfenning, Meinig & Partner mbB
(86) International application number: PCT/CN2015/095992
(87) International publication number: WO 2017/091949

(56) References cited:
- EP-A1- 2 887 708
- WO-A1-2010/037337
- WO-A1-2015/004507
- CN-A- 101 808 401
- CN-A- 102 986 288
- US-A1- 2012 238 247

## Description

### TECHNICAL FIELD

The present invention relates to the wireless network field, and in particular, to a communication method, a micro base station, a micro base station controller, a terminal, and a system.

### BACKGROUND

To ensure corporate data security, terminals of some medium- or large-sized enterprises are not allowed to directly access the Internet (Internet). A router of the enterprise is used to limit a destination Internet Protocol address (Internet Protocol Address, IP Address) range of a terminal service, so that a format of a service request sent by a terminal is transformed by a proxy server, and the terminal can access the Internet.

To improve intra-enterprise wireless network quality, a small cell such as a pico is deployed indoors, and the pico is a base station device similar to a terminal device. Currently, a separate network configuration is set for the pico in an enterprise. For example, a VLAN for isolation is separately configured at an enterprise egress to logically isolate a pico service from an intra-enterprise network service, so as to provide an interface for transmission from the pico to a core network.

However, there is a proxy server (Proxy Server) in an enterprise network, and when a small cell is deployed by using the enterprise network, enterprise network settings need to be modified hop by hop for the deployed small cell. This increases network construction costs.

US 2012/0238247 A1 concerns providing network services to a mobile user equipment based on Femtocell technology. EP 2 887 708 A1 address quickly establishing a trunking service.

### SUMMARY

According to a communication method and a system provided in embodiments of the present invention, networking is performed by using an existing network resource of an enterprise to complete wireless network communication, so as to reduce network construction costs.

According to a first aspect, an embodiment of the present invention comprises the features of claim 1 and provides a communication method, where the communication method includes: connecting, by a micro base station, to an intra-enterprise Ethernet, and obtaining an Internet Protocol IP address of the micro base station and an IP address of a micro base station controller; sending a connection request to the micro base station controller corresponding to the obtained IP address of the micro base station controller, where the connection request is used to instruct the micro base station controller to establish a connection to the micro base station controller; and when the micro base station receives a resource request message sent by a terminal, such as a mobile phone, a tablet computer, or another device that can perform wireless communication, and the resource request message includes an IP address of the terminal and a destination address of a requested resource, forwarding the resource request message to the micro base station controller, so that the micro base station controller sends the resource request message to a server corresponding to the destination address.

According to the communication method provided in this embodiment of this application, in a scenario in which there is a proxy server in an enterprise, networking is performed by the micro base station and the micro base station controller by using an existing network resource of the enterprise. This reduces network construction costs.

With reference to the first aspect, in a first possible implementation of the first aspect, the micro base station may obtain the Internet Protocol IP address of the micro base station by using a Dynamic Host Configuration Protocol DHCP.

With reference to the first possible implementation of the first aspect, in a second possible implementation of the first aspect, the obtaining the Internet Protocol IP address of the micro base station by using a Dynamic Host Configuration Protocol DHCP specifically
includes: sending, by the micro base station, an IP address request message to a DHCP server, so that the DHCP server returns, to the micro base station according to the IP address request message, the IP address assigned to the micro base station; and receiving, by the micro base station, the IP address of the micro base station.

With reference to any one of the foregoing possible implementations of the first aspect, in a third possible implementation of the first aspect, the micro base station may obtain the IP address of the micro base station controller from the DHCP server of the enterprise. During practical enterprise deployment, the DHCP server of the enterprise needs to be preconfigured, that is, IP addresses of all micro base station controllers of the enterprise need to be prestored to the DHCP server.

With reference to the first possible implementation and the second possible implementation of the first aspect, in a fourth possible implementation of the first aspect, the micro base station may obtain the IP address of the micro base station controller from a secure digital SD card, where the SD card may be a component of the micro base station, for example, a USB flash drive that is a storage device. In a practical enterprise deployment, the SD card needs to be preconfigured to presotre IP addresses of all micro base station controllers of the enterprise to the SD card.

With reference to the first aspect, in a fifth possible implementation of the first aspect, before forwarding the resource request message to the micro base station controller, the micro base station needs to receive the resource request message sent by the terminal, and packetizes the resource request message and the IP address of the micro base station to send packetized information to the micro base station controller.

According to a second aspect, an embodiment of this application further provides a communication method, where the communication method includes:
connecting, by a micro base station controller, to an Ethernet, and receiving a resource request message sent by a micro base station, where the resource request message includes a destination address of a requested resource, and may further include an IP address of the micro base station controller sending the resource message and an IP address of a terminal that needs to obtain the resource; sending, by the micro base station controller by using a core network, the resource request message to a server corresponding to the destination address, so that the server returns resource information according to the resource request message, where the resource information includes the resource required in the resource request message; receiving, by the micro base station controller, the resource information; and sending the resource information to the micro base station sending the resource request message, so that the micro base station sends the resource information to the terminal that requests to send the resource request message.

According to the communication method provided in this embodiment of this application, in a scenario in which there is a proxy server in an enterprise, networking is performed by the micro base station controller and the micro base station by using an existing network resource of the enterprise. This reduces network construction costs.

With reference to the second aspect, in a first possible implementation of the second aspect, before the receiving a resource request message sent by a micro base station, the method further includes:
establishing, by the micro base station, a communication connection before performing communication, where in a process of establishing the communication connection, the micro base station controller receives a connection request sent by the micro base station, and the connection request includes an IP address of the micro base station; and performing, by the micro base station controller, authentication on the micro base station according to the IP address of the micro base station, where the authentication may be implemented by using a protocol such as an IPSec protocol.

According to a third aspect, an embodiment of this application provides another communication method, where the method includes: establishing, by a terminal such as a mobile phone, a tablet computer, or another device that can perform communication connection, a communication connection to a micro base station; and sending a resource request message to the micro base station when the terminal needs to obtain resource information, where the resource request message includes an IP address of the terminal and a destination address of a requested resource, so that the micro base station forwards the resource request information to a micro base station controller.

According to the communication method provided in this application, a network resource of an enterprise is used to implement an intra-enterprise wireless network connection by using the micro base station and the micro base station controller, so as to ensure wireless communication quality.

With reference to the third aspect, in a first possible implementation of the third aspect, the terminal may establish the communication connection to the micro base station by using a radio resource control protocol RRC.

With reference to the first possible implementation of the third aspect, in a second possible implementation of the third aspect, that the terminal establishes the communication connection to the micro base station by using a radio resource control protocol RRC specifically includes: sending, by the terminal, a connection request to the micro base station, so that the micro base station allocates a radio resource to the terminal according to the connection request, and sends radio resource information to the terminal; receiving, by the terminal, the radio resource information; and establishing, by the terminal, the communication connection to the micro base station according to the radio resource information.

According to a fourth aspect, an embodiment of this application provides a micro base station, where the micro base station is connected to an intra-enterprise Ethernet, and the micro base station includes: an obtaining unit, a sending unit, and a receiving unit, where
the obtaining unit is configured to obtain Internet Protocol IP addresses of the micro base station and a micro base station controller;
the sending unit is configured to send a connection request to the micro base station controller according to the obtained IP address of the micro base station controller, where the connection request includes the IP address of the micro base station, so that the micro base station controller connects to the micro base station according to the connection request; and
when the receiving unit receives a resource request message sent by a terminal, the sending unit is further configured to send the resource request message to the micro base station controller, where the resource request message includes a destination address of a requested resource, so that the micro base station controller forwards the resource request message to a server corresponding to the destination address.

According to the micro base station provided in this embodiment of this application, when there is a proxy server in an enterprise, networking is performed by the micro base station controller by using a network resource of the enterprise, to establish a wireless network connection. This reduces networking costs and improves wireless network quality.

With reference to the fourth aspect, in a first possible implementation of the fourth aspect, the obtaining unit may specifically obtain the Internet Protocol IP address of the micro base station by using a Dynamic Host Configuration Protocol DHCP.

With reference to the second possible implementation of the fourth aspect, in a third possible implementation of the fourth aspect, the obtaining unit is specifically configured to send an IP address request message to a DHCP server, so that the DHCP server returns, to the micro base station according to the IP address request message, the IP address of the micro base station; and the receiving unit is configured to receive the IP address of the micro base station.

With reference to any one of the foregoing possible implementations of the fourth aspect, in a third possible implementation of the fourth aspect, the obtaining unit may obtain the IP address of the micro base station controller from the DHCP server.

With reference to the first possible implementation and the second possible implementation of the fourth aspect, in a fourth possible implementation of the fourth aspect, the obtaining unit may alternatively obtain the IP address of the micro base station controller from a secure digital SD card.

With reference to the fourth aspect, in a fifth possible implementation of the fourth aspect, the receiving unit is further configured to receive the resource request message sent by the terminal.

According to a fifth aspect, an embodiment of this application provides a micro base station controller, where the micro base station controller is connected to an Ethernet, and includes a receiving unit and a sending unit, where
the receiving unit is configured to receive a resource request message sent by a micro base station, where the resource request message includes a destination address of a requested resource; and
the sending unit is configured to forward the resource request message to a server corresponding to the destination address, so that the server corresponding to the destination address sends, to the micro base station controller according to the resource request message, resource information required in the resource request message; the receiving unit is further configured to receive the resource information; and the sending unit is further configured to send the resource information to the micro base station.

According to the micro base station controller provided in this embodiment of this application, in a scenario in which there is a proxy server in an enterprise, networking is performed by the micro base station controller and the micro base station by using an existing network resource of the enterprise. This reduces network construction costs.

With reference to the fifth aspect, in a first possible implementation of the fifth aspect, the micro base station controller further includes an authentication unit, where the receiving unit is further configured to receive a connection request sent by the micro base station, where the connection request includes an IP address of the micro base station; and the authentication unit is configured to perform, according to the IP address in the connection request, authentication on the micro base station sending the connection request, where the authentication can be implemented by using a protocol such as an IPSec protocol.

According to a sixth aspect, an embodiment of this application provides a terminal, where the terminal includes a connection unit and a sending unit, where the connection unit is configured to: establish a communication connection to a micro base station; and send a resource request message to the micro base station when resource information needs to be obtained, so that the micro base station forwards the resource request message to a micro base station controller.

According to the terminal provided in this application, a network resource of an enterprise is used to implement an intra-enterprise wireless network connection by using the micro base station and the micro base station controller, so as to ensure wireless communication quality.

With reference to the sixth aspect, in a first possible implementation of the sixth aspect, the connection unit may establish the communication connection to the micro base station by using a radio resource control protocol RRC.

With reference to the first possible implementation of the sixth aspect, in a second possible implementation of the sixth aspect, that the connection unit establishes the communication connection to the micro base station by using a radio resource control protocol RRC specifically includes: the sending unit is configured to send a connection request to the micro base station, so that the micro base station allocates a radio resource to the terminal according to the connection request, and sends radio resource information to the terminal; the receiving unit is configured to receive the radio resource information; and the connection unit is specifically configured to establish the communication connection to the micro base station according to the radio resource information.

According to a seventh aspect, this application provides a system, where the system includes at least one micro base station according to any one of possible implementations of the third aspect, at least one micro base station controller according to any one of possible implementations of the fourth aspect, and at least one terminal according to any one of possible implementations of the sixth aspect.

With reference to the seventh aspect, the system further includes a proxy server, configured to: receive a resource request message sent by a terminal, for example, a device such as a desktop computer that is used for wireless communication, where the resource request message includes a destination address of a requested resource; and forward the resource request message to a server corresponding to the destination address, so that the server corresponding to the destination address sends, to the proxy server according to the resource request message, resource information required in the resource request message.

Based on the foregoing technical solutions, the embodiments of the present invention provide a communication method, a micro base station, a micro base station controller, a terminal, and a system. In a scenario in which there is a proxy server in an enterprise, networking is performed by the micro base station and the micro base station controller by using an existing network resource. This reduces network construction costs and improves wireless communication quality.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture according to an embodiment of this application;
FIG. 2 is a schematic structural diagram of a micro base station according to an embodiment of this application;
FIG. 3 is a schematic structural diagram of a micro base station controller according to an embodiment of this application;
FIG. 4 is a schematic structural diagram of a terminal according to an embodiment of this application;
FIG. 5 is a flowchart of a communication method according to an embodiment of this application;
FIG. 6 is a flowchart of a communication method according to another embodiment of this application;
FIG. 7 is a flowchart of a communication method according to another embodiment of this application;
FIG. 8 is a flowchart of a communication method according to another embodiment of this application;
FIG. 9A and FIG. 9B are a signaling diagram of a communication method according to an embodiment of this application;
FIG. 10 is a schematic structural diagram of a micro base station according to another embodiment of this application;
FIG. 11 is a schematic structural diagram of a micro base station according to still another embodiment of this application;
FIG. 12 is a schematic structural diagram of a micro base station controller according to another embodiment of this application;
FIG. 13 is a schematic structural diagram of a micro base station controller according to still another embodiment of this application; and
FIG. 14 is a schematic structural diagram of a terminal according to another embodiment of this application.

### DESCRIPTION OF EMBODIMENTS

The embodiments of the present invention are applied to intra-enterprise networking technologies. On a premise that network restriction access to an existing network is not affected, a wireless connection between a terminal and a network is implemented by disposing a micro base station and a micro base station controller in an existing network architecture and by using an existing network resource of an enterprise.

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

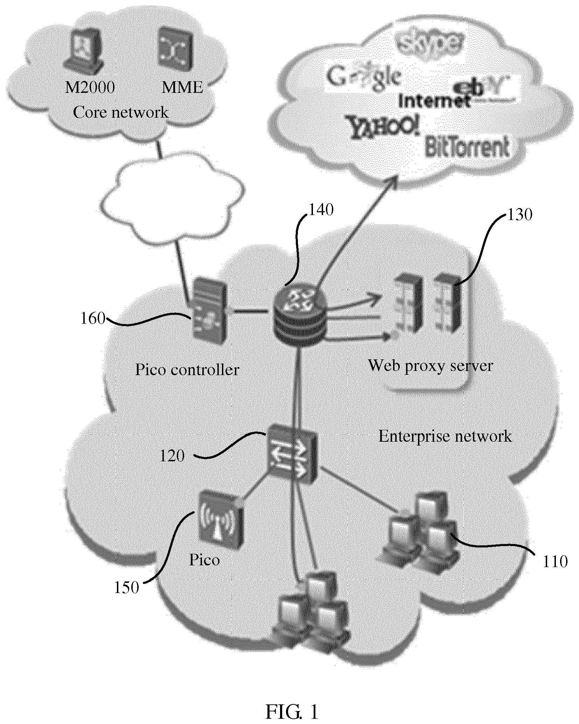

For ease of description, FIG. 1 is used as an example in the following. The technical solutions provided in the embodiments of the present invention are described in detail with reference to FIG. 1. It should be understood that this is only an example to describe the technical solutions of the embodiments of the present invention, but is not construed as any limitation on the embodiments of the present invention.

FIG. 1 is a schematic diagram of a network architecture according to an embodiment of this application. As shown in FIG. 1, the network architecture 100 may include: a plurality of terminals 110, a switch 120, a proxy server 130, a border router 140, a micro base station 150, and a micro base station controller 160. The micro base station 150 is a base station that is disposed in an enterprise and that is used in a small area network as a terminal device.

The micro base station 150 deployed in the enterprise may be referred to as a pico, and the micro base station controller may be referred to as a pico controller. The micro base station 150 may be connected to an enterprise network by using the switch 120 and the border router 140. The micro base station controller 160 is deployed near the border router 140 at an enterprise egress, and is externally connected to a core network (Core Network), for example, a mobile network element management system M2000 (iManager M2000) that is a key node MME (Mobility Management Enity) of the 3GPP protocol LTE access network, to forward a resource request message sent by a radio communications equipment such as the micro base station 150 or the micro base station 150 and the micro base station controller 160 to a different destination server.

The micro base station 150 is configured to act as the terminal 110 to send resource request information to a destination server, and send corresponding resource information obtained from the destination server to the terminal 110. The micro base station controller 160 is configured to control communication between the micro base station 150 and the destination server, that is, all services of the micro base station 150 of the enterprise need to pass through the micro base station controller 160 to connect to a network. In this embodiment of this application, the communication between the micro base station 150 and the micro base station controller 160 may be implemented by using a customized protocol, to ensure security of an intra-enterprise wireless network.

It should be noted that, in this embodiment of this application, an ordinary terminal of the enterprise, for example, the terminal 110, cannot connect to and communicate with the micro base station controller 160.

The proxy server 130 is configured to: receive a resource request message sent by the terminal 110, where the resource request message includes a destination address; and forward the resource request message to a server corresponding to the destination address, so that the server corresponding to the destination address sends, to the proxy server 130 according to the resource request message, resource information required in the resource request message.

In this embodiment of this application, the terminal may obtain the resource information in a wireless manner by using the micro base station 150 and the micro base station controller 160. During actual communication, the micro base station 150 and the micro base station controller 160 may use a special protocol, for example, the User Datagram Protocol (Use Dategram Protocol, UDP) protocol, to support communication.

In this embodiment of this application, the terminal 110 may send the resource request information such as an http/https request to the destination server, for example, a Google server or a YAHOO server, by using the proxy server 130 such as a web proxy server, to obtain the corresponding resource information. In this embodiment of this application, that the terminal 110 obtains the resource information by using the micro base station 150 does not affect obtaining the resource information by the terminal 110 by using the proxy server 130. For example, the terminal sends an http/https request to a web proxy server to obtain resource information, and the terminal may also obtain resource information by using a micro base station according to a 3GPP standard protocol.

In this embodiment of this application, there may be at least one micro base station 150 and at least one micro base station controller 160 in the enterprise. Each micro base station 150 may implement a network connection by using the switch 120; and an external interface may be added to each micro base station controller 160 for connecting to the core network. Even though the external interface is connected to the terminal 110, the terminal 110 cannot connect to the network. If an intra-enterprise networking mode designed in this application is used, neither a networking scheme of a current enterprise network needs to be modified, nor network right management is affected the enterprise network.

It should be further noted that, in this embodiment of this application, the terminal 110 in FIG. 1 may be a desktop computer, a personal computer (Personal Computer, PC), or another device that can be connected to a network in a wired manner.

When executing the technical solution in this embodiment, the terminal 110 may alternatively be a device that performs wireless communication (not shown in FIG. 1), such as a mobile phone, a tablet computer, a PC, or another device that can perform wireless communication.

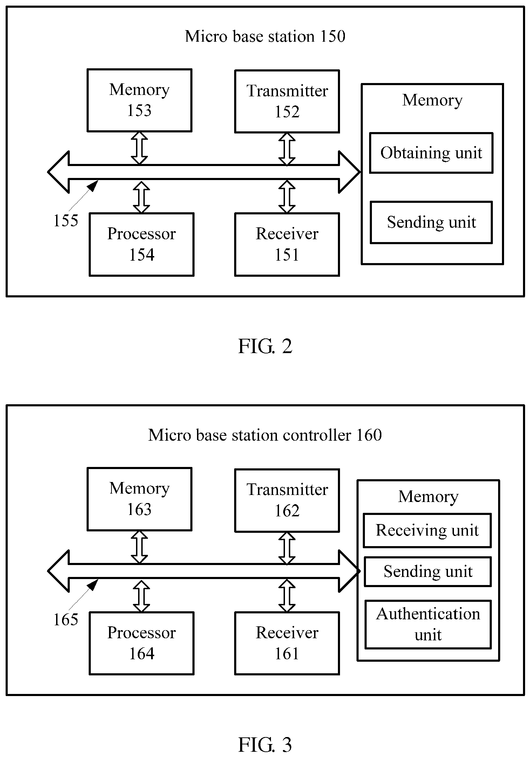

In this embodiment of this application, as shown in FIG. 2, the micro base station 150 in FIG. 1 may include a receiver 151, a transmitter 152, a memory 153, a processor 154, and a communications bus 155. The receiver 151, the transmitter 152, the memory 153, and the processor 154 are connected by using the communications bus 155 to communicate with each other. The receiver 151 is configured to receive a signal input or sent by an external device. The transmitter 152 is configured to send corresponding information to the external device. The memory 153 is configured to store an instruction and data. The processor 154 is configured to invoke the instruction in the memory and execute a corresponding operation.

In this embodiment of this application, the processor 154 may be a central processing unit (Central Processing Unit, CPU), or the processor 154 may be another general purpose processor, a digital signal processor (DSP), an application-specific integrated circuit (ASIC), a field programmable gate array (FPGA) or another programmable logical device, a discrete gate or transistor logical device, a discrete hardware component, or the like. The general purpose processor may be a microprocessor, or the processor may be any conventional processor or the like.

The communications bus 155 may include a power bus, a control bus, a status signal bus, and the like, in addition to a data bus. However, for clear description, various types of buses in the figure are marked as the communications bus 155.

The memory 153 may include a read-only memory and a random access memory, and provides an instruction and data to the processor 154. A part of the memory may further include a non-volatile random access memory. For example, the memory may further store device type information.

In this embodiment of this application, as shown in FIG. 3, the micro base station controller 160 in FIG. 1 may also include a receiver 161, a transmitter 162, a memory 163, a processor 164, and a communications bus. The receiver 161, the transmitter 162, the memory 163, and the processor 164 are connected by using the communications bus 165 to communicate with each other. The receiver 161 is configured to receive a signal input or sent by an external device. The transmitter 162 is configured to send corresponding information to the external device. The memory 163 is configured to store an instruction and data. The processor 164 is configured to invoke the instruction in the memory and execute a corresponding operation.

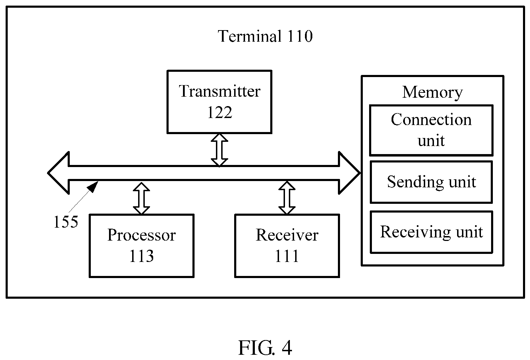

FIG. 4 is a schematic structural diagram of a terminal according to an embodiment of this application. As shown in FIG. 4, the terminal 110 includes a receiver 111, a transmitter 112, a processor 113, and a communications bus 114. The receiver 111, the transmitter 112, and the processor 113 are connected by using the communications bus 114 to communicate with each other. The receiver 111 is configured to receive a signal input or sent by an external device. The transmitter 112 is configured to send corresponding information to the external device. The processor 113 is configured to invoke the instruction in the memory and execute a corresponding operation.

It should be noted that, specific forms or functions of the devices of the micro base station controller 160 in FIG. 3 and the terminal 110 in FIG. 4 are similar to those of components of the micro base station 150 shown in FIG. 3. For brevity of description, details are not described herein again.

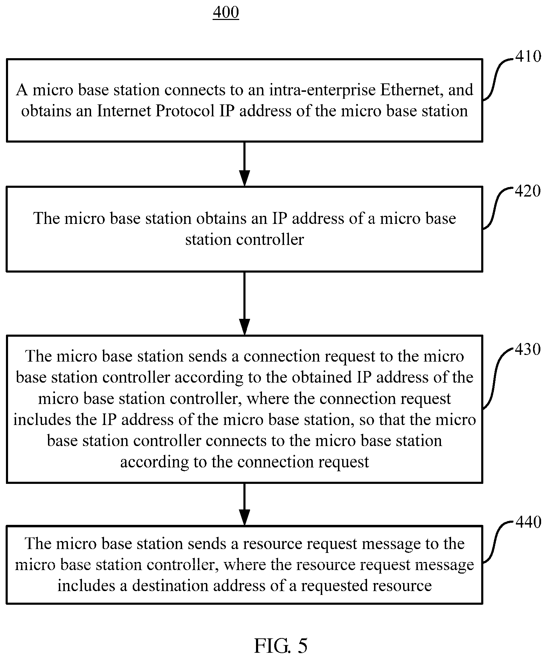

FIG. 5 is a flowchart of a communication method according to an embodiment of this application. This method is executed by a micro base station, and can be implemented by using the micro base station 150 in FIG. 1. As shown in FIG. 5, the method 400 includes the following steps:
S410. A micro base station connects to an intra-enterprise Ethernet, and obtains an Internet Protocol IP address of the micro base station.
S420. The micro base station obtains an IP address of a micro base station controller.
S430. The micro base station sends a connection request to the micro base station controller according to the obtained IP address of the micro base station controller, where the connection request includes the IP address of the micro base station, so that the micro base station controller connects to the micro base station according to the connection request.
S440. The micro base station sends a resource request message to the micro base station controller, where the resource request message includes a destination address of a requested resource, so that the micro base station controller forwards the resource request message to a server corresponding to the destination address.

Specifically, the micro base station and the micro base station controller are deployed in an enterprise and are connected by using the Ethernet. In this embodiment of this application, the micro base station is equivalent to a terminal of the enterprise, for example, a PC. When the micro base station is started, the micro base station needs to obtain the IP address of the micro base station and the IP address of the micro base station controller, to ensure normal communication quality and security in the enterprise.

In S410, when the micro base station is started, the micro base station needs to obtain the IP address of the micro base station, for example, may obtain a leased IP address from a DHCP server by using a DHCP protocol. Specifically, the micro base station sends IP request information to the DHCP server, where the IP request information includes leased IP address information, so that the DHCP server determines a lease of the IP address. Before the lease of the IP address expires, the DHCP server returns response information to the micro base station, and the response information includes the leased IP address. The micro base station also uses the leased IP address.

In this embodiment of this application, the response information may further include information that instructs the micro base station to resend the leased IP address. In this case, the IP address in the IP request information sent by the micro base station expires or is occupied by another device.

In S420, preferably, the micro base station may obtain the IP address of the micro base station controller by using the DHCP protocol. In this embodiment of this application, before obtaining the IP address of the micro base station controller, the micro base station preconfigures the DHCP server of the enterprise, and stores IP addresses of all micro base station controllers of the enterprise.

In S430, after obtaining the IP address of the micro base station controller, the micro base station sends the connection request to the micro base station controller according to the IP address of the micro base station controller. The connection request includes the IP address of the micro base station, so that the micro base station controller performs, according to the IP address in the connection request, authentication on the micro base station sending the connection request, and after the authentication succeeds, connects to the micro base station sending the connection request. In this embodiment of this application, the authentication may be performed on the micro base station by using Internet Protocol Security (IP Security, IPSec), for example, IPSec4036.

In step S440, when the micro base station needs to act as the terminal to obtain the resource information from the destination server, the micro base station packetizes the resource request message sent by the terminal and the IP address of the micro base station, and sends packetized information to the micro base station controller. The resource request message may include the destination address of the requested resource, so that the micro base station controller forwards, according to the destination address of the requested resource, the resource request message to the destination server corresponding to the destination address, and the micro base station controller encrypts the received resource request message, for example, encrypts the received resource request message by using IPSec, and forwards the resource request message to a destination server corresponding to the destination address.

Based on the communication method provided in this application, in a scenario in which there is a proxy server in the enterprise, networking is performed by the micro base station and the micro base station controller by using an existing network resource of the enterprise. This reduces network construction costs.

Optionally, in another embodiment of this application, that the micro base station obtains an IP address of a micro base station controller includes: obtaining the Internet Protocol IP address of the micro base station by using a Dynamic Host Configuration Protocol DHCP.

Specifically, in this embodiment of this application, the obtaining the Internet Protocol IP address of the micro base station by using a Dynamic Host Configuration Protocol DHCP includes:
sending, by the micro base station, an IP address request message to the DHCP server, so that the DHCP server returns response information to the micro base station according to the IP address request message, where the response information includes the IP address assigned to the micro base station; and receiving, by the micro base station, the response information, and obtaining the IP address from the response information.

Optionally, in another embodiment of this application, that the micro base station obtains an IP address of a micro base station controller includes: obtaining the IP address of the micro base station controller from a secure digital memory card (Secure Digital Memory Card, SD card).

Specifically, the SD card may be a component of the micro base station. Before obtaining the IP address of the micro base station controller from the SD card, the micro base station needs to preconfigure an IP address of a micro base station controller of the enterprise for the SD card, for example, store the IP address of the micro base station controller of the enterprise to the SD card, so that the micro base station obtains from the SD card an IP address of any micro base station controller of the enterprise.

It should be understood that, in this embodiment of this application, the micro base station may alternatively obtain an IP address of a micro base station controller from the SD card according to a customized logical relationship.

Optionally, in another embodiment of this application, that the micro base station obtains an Internet Protocol IP address of a micro base station first time by using a Dynamic Host Configuration Protocol DHCP includes:
sending, by the micro base station, an IP address request message to a DHCP server, where the IP address request message includes a source address of the micro base station, so that the DHCP server returns response information to the micro base station according to the IP address request message, where the response information includes the IP address assigned to the micro base station; and receiving, by the micro base station, the response information, and obtaining the IP address from the response information.

Specifically, when the micro base station logs in for the first time, the micro base station needs to send the IP address request message to the DHCP server. The IP address request message includes the source address and the destination address of the micro base station, where usually, the source address is 0.0.0.0, and the destination address is 255.255.255.255, so that the DHCP server returns the response information to the micro base station according to the IP address request message, and the response information includes the IP address assigned by the DHCP server to the micro base station. After receiving the response information, the micro base station obtains an IP address from the response information, and performs communication by using the IP address.

Optionally, in this embodiment of this application, before the micro base station sends the resource request message to the micro base station controller, the method 400 further includes: receiving, by the micro base station, the resource request message sent by a terminal.

Specifically, the resource request message may include related information such as a destination address of a requested resource and an IP address of the terminal.

According to the communication method provided in this embodiment of this application, in a scenario in which there is a proxy server, networking is performed by the micro base station and the micro base station controller by using an intra-enterprise network. This reduces network construction costs and improves wireless network quality.

It should be noted that, in this embodiment of this application, S210, S220, S230, and S240 in the method 400 may be implemented by the devices 151, 152, and 154 in FIG. 2.

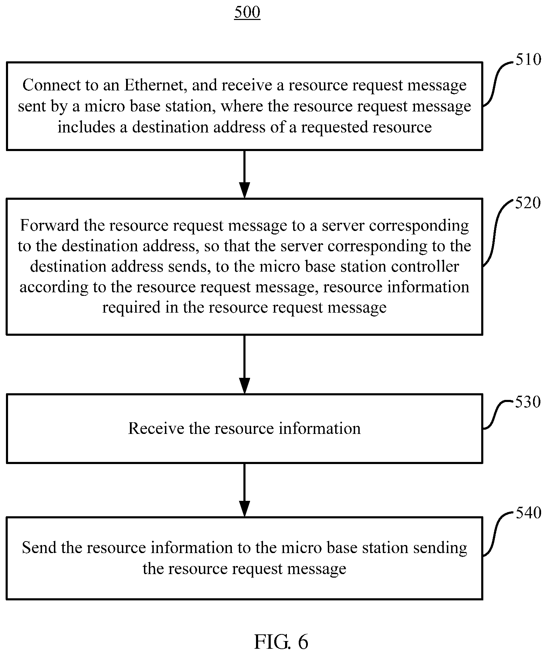

FIG. 6 is a flowchart of a communication method according to another embodiment of this application. This method is executed by a micro base station controller, and can be implemented by using the micro base station 160 in FIG. 1. As shown in FIG. 6, the method 500 includes the following steps.

S510. A micro base station controller connects to an Ethernet, and receives a resource request message sent by a micro base station, where the resource request message includes a destination address of a requested resource.

S520. The micro base station controller forwards the resource request message to a server corresponding to the destination address, so that the server corresponding to the destination address sends, to the micro base station controller according to the resource request message, resource information required in the resource request message.

S530. The micro base station controller receives the resource information.

S540. The micro base station controller sends the resource information to the micro base station sending the resource request message.

Specifically, the micro base station controller is deployed in an enterprise and is connected to the Ethernet. When the micro base station controller works, the micro base station controller needs to receive the resource request message sent by the micro base station. The resource request message may include related information such as the destination address of the requested resource, an IP address of a terminal requesting a resource, and an IP address of the micro base station sending the resource request message. The micro base station controller substitutes an IP address of the micro base station controller for the IP address of the micro base station in the received resource request message to perform packetization and encryption, for example, the encryption may be implemented by using IPSec; and forwards packetized and encrypted information to a destination server corresponding to the destination address of the requested resource by using the core network, so that the server corresponding to the destination address returns corresponding resource information to the micro base station controller corresponding to the IP address of the micro base station controller included in the information. The resource information may include the IP address of the terminal requesting the resource information, the IP address of the micro base station, and the IP address of the micro base station controller. The micro base station controller receives the resource information sent by the server corresponding to the destination address, and sends, according to the IP address of the micro base station recorded when the resource request information sent by the micro base station is received, the resource information to the micro base station corresponding to the IP address of the micro base station.

Based on the communication method provided in this application, in a scenario in which there is a proxy server in the enterprise, networking is performed by the micro base station and the micro base station controller by using an existing network resource of the enterprise. This reduces network construction costs.

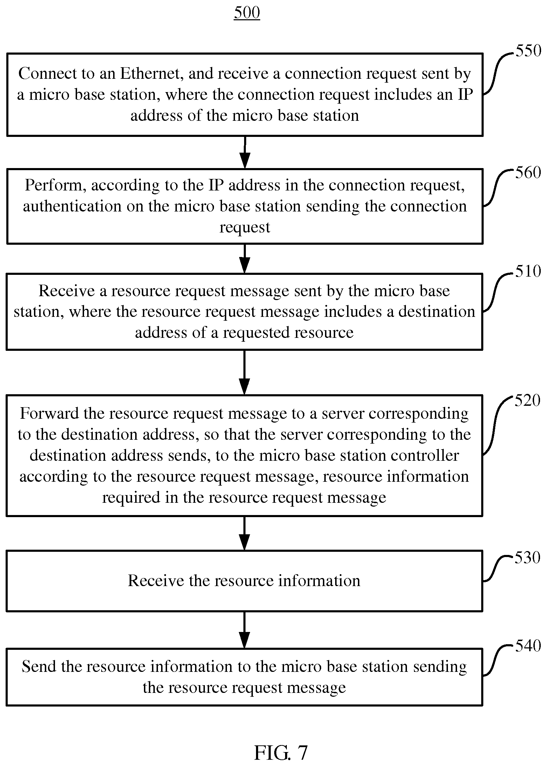

Optionally, in another embodiment of this application, as shown in FIG. 7, before the resource request message sent by the micro base station is received, the method 500 further includes the following steps.

S550. The micro base station controller receives a connection request sent by the micro base station, where the connection request includes an IP address of the micro base station.

S560. The micro base station controller performs, according to the IP address in the connection request, authentication on the micro base station sending the connection request.

Specifically, in this embodiment of this application, the connection request is a request for establishing communication between the micro base station controller and the micro base station. When the micro base station controller receives the connection request required by the micro base station, the micro base station controller needs to authenticate an identity of the micro base station sending the connection request, for example, in an authentication process, authentication may be implemented by using the IPSec, to ensure that the micro base station sending the connection request is an authorized micro base station, for example, the micro base station sending the connection request is not a non-micro base station device such as a terminal.

Based on the communication method provided in this application, in a scenario in which there is a proxy server in the enterprise, networking is performed by the micro base station and the micro base station controller by using an existing network resource of the enterprise. This reduces network construction costs. In addition, authentication is performed when the communication connection is established by the micro base station and the micro base station, enhancing communication security.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

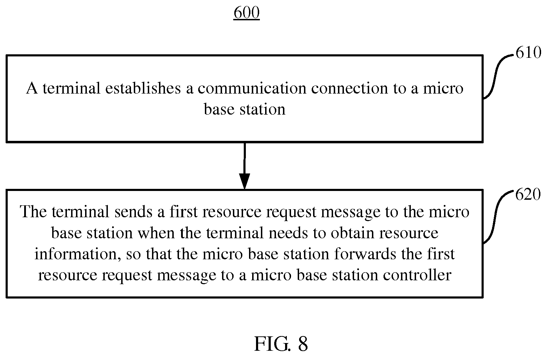

FIG. 8 is a flowchart of a communication method according to another embodiment of this application. As shown in FIG. 8, the method is executed by a terminal 110 that performs wireless communication, and the method 600 includes the following steps.

S610. A terminal establishes a communication connection to a micro base station.

S620. The terminal sends a first resource request message to the micro base station when the terminal needs to obtain resource information, so that the micro base station forwards the first resource request message to a micro base station controller.

Specifically, in this embodiment of this application, the terminal may be a device that performs wireless communication by using the micro base station, for example, a mobile phone, a tablet computer, and another device that can perform wireless communication. Before obtaining the resource information, the terminal establishes the communication connection to the micro base station.

In another embodiment, a radio resource control protocol (Radio Resource Control, RRC) may be used to establish the communication connection to the micro base station.

A process of establishing the communication connection is as follows: The terminal sends a request, such as an RRC Connection Request, to the micro base station, so that after receiving the request, the micro base station allocates corresponding radio resource information to the terminal according to information such as an identifier of the terminal and a reason for requesting a connection, where the resource information may be information for performing related communication connection, such as channel resource information; and sends the allocated radio resource information to the terminal according to the identifier of the terminal.

After receiving the radio resource information, the terminal establishes the communication connection to the micro base station according to a channel in the radio resource information.

When the terminal needs to request the resource information, the terminal sends the resource request message to the micro base station by using the established communication connection, where the resource request message includes an IP address of the terminal and a destination address of a requested resource, so that after receiving the resource request message, the micro base station forwards the resource request message to the base station controller, to further obtain, from the server corresponding to the destination address, the resource information required in the resource request.

Based on the communication method provided in this application, in a scenario in which there is a proxy server in the enterprise, networking is performed by the micro base station and the micro base station controller by using an existing network resource of the enterprise. This reduces network construction costs. In addition, authentication is performed when the communication connection is established by the micro base station and the micro base station, enhancing communication security.

In this embodiment of this application, "first" in the first resource request message is used for differentiating the first resource request message from resource request information sent by a terminal that requests for a resource in a wired manner in the enterprise. "First" in this application is not intended to limit the technical solutions of this application.

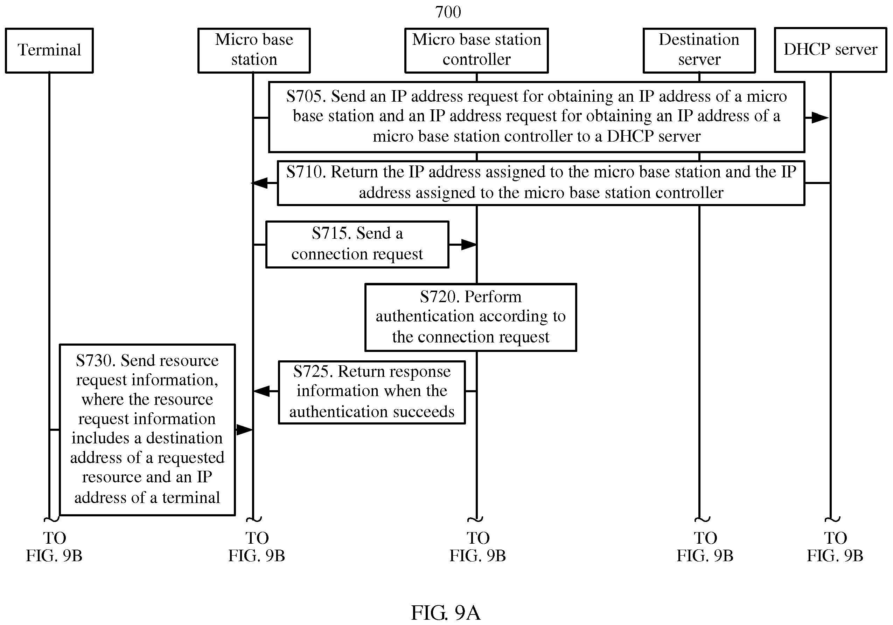

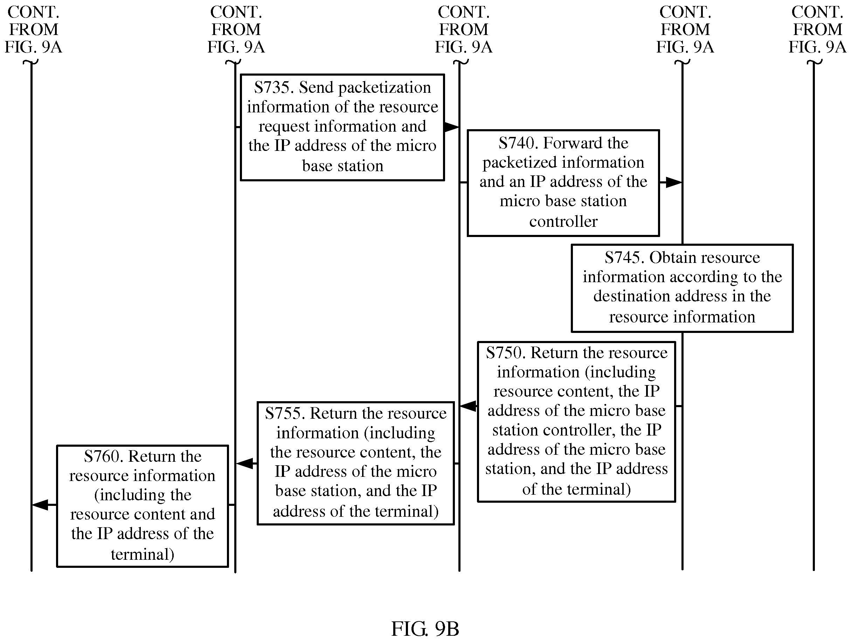

FIG. 9A and FIG. 9B are a signaling diagram of a communication method according to another embodiment of this application. As shown in FIG. 9A and FIG. 9B, the method 700 includes the following steps.

S705. A DHCP server of a micro base station sends an IP address request for obtaining an IP address of the micro base station and an IP address request for obtaining an IP address of a micro base station controller.

S710. The DHCP server returns the IP address assigned to the micro base station and the IP address assigned to the micro base station controller.

S715. The micro base station sends a connection request to the micro base station controller.

S720. The micro base station controller performs authentication according to the connection request.

S725. After the authentication succeeds, the micro base station controller returns response information to the micro base station.

S730. The micro base station establishes a connection to the micro base station controller according to the response message.

S735. A terminal sends resource request information to the micro base station, where the resource request information includes a destination address of a requested resource and an IP address of the terminal.

S740. The micro base station packetizes the resource request information and the IP address of the micro base station, and sends packetized information to the micro base station controller.

S745. The micro base station controller forwards the packetized information and the IP address of the micro base station controller to a destination address corresponding to the destination address.

S750. The server corresponding to the destination address obtains resource information according to the destination address in the resource information.

S755. The server corresponding to the destination address returns the resource information to the micro base station controller, where the resource information may include resource content, the IP address of the micro base station, and the IP address of the terminal.

S760. The micro base station controller returns the resource information to the micro base station.

S765. The micro base station returns the resource information to the terminal.

Specifically, after a network connection is established between the micro base station and the micro base station controller, performed steps S705 to S740 included in the method 700 may be specifically implemented by S410, S420, S430, and S440 included in the method 400 shown in FIG. 5. S745 to S760 included in the method 700 may be specifically implemented by S510, S520, S530, and S540 included in the method 500 shown in FIG. 6. For brevity of description, details are not described herein again.

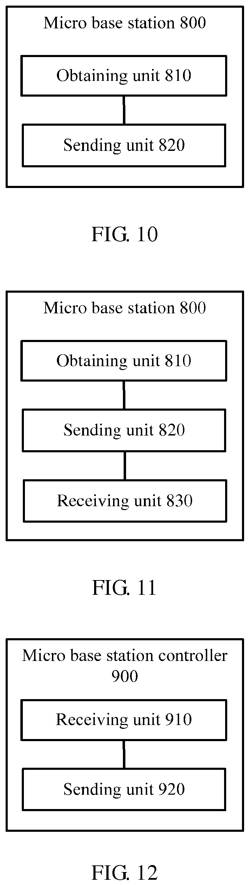

The foregoing describes in detail the communication method according to an embodiment of the present invention with reference to FIG. 5 to FIG. 9A and FIG. 9B, and the following describes a micro base station and a micro base station controller according to an embodiment of the present invention with reference to FIG. 10 to FIG. 14.

FIG. 10 is a schematic structural diagram of a micro base station according to an embodiment of this application. The micro base station shown in FIG. 10 is connected to an intra-enterprise Ethernet, and the micro base station 800 includes an obtaining unit 810 and a sending unit 820.

The obtaining unit 810 is configured to obtain an Internet Protocol IP address of the micro base station.

The obtaining unit 810 is further configured to obtain an IP address of a micro base station controller.

The sending unit 820 is configured to send a connection request to the micro base station controller according to the obtained IP address of the micro base station controller, where the connection request includes the IP address of the micro base station, so that the micro base station controller connects to the micro base station according to the connection request.

The sending unit 820 is further configured to send a resource request message to the micro base station controller, where the resource request message includes a destination address of a requested resource, so that the micro base station controller forwards the resource request message to a server corresponding to the destination address.

Specifically, when an intra-enterprise network is connected, the micro base station is started, and the micro base station needs to obtain the IP address of the micro base station and obtain the IP address of the micro base station controller by using the network, for example, may obtain the IP address of the micro base station and the IP address of the micro base station controller by using a DHCP protocol. After obtaining the IP address of the micro base station controller, the micro base station may send the received resource request message and the IP address of the micro base station to the micro base station controller of the IP address, where the resource request message may include an IP address of a terminal and the destination address of the requested resource, so that after receiving the information sent by the micro base station, the micro base station controller forwards the information to the server corresponding to the destination address, and the destination server can obtain corresponding resource information according to the destination address in the information, packetize the resource information, and return the packetized resource information to the micro base station controller sending the resource request message. The packetized resource information may include the resource information of the requested resource, the IP address of the micro base station controller, the IP address of the micro base station, and the IP address of the terminal.

Based on the micro base station provided in this application, the micro base station and the micro base station controller are deployed by using an enterprise network to implement a wireless network connection. This reduces construction costs of an intra-enterprise network and improves wireless communication quality.

Optionally, in another embodiment of this application, the obtaining unit 810 obtains the IP address of the micro base station controller by using a DHCP protocol.

Specifically, in this embodiment of this application, as shown in FIG. 11, the micro base station further includes a receiving unit 830 of the micro base station 800. The obtaining unit 810 is specifically configured to send an IP address request message to a DHCP server, so that the DHCP server returns response information to the micro base station according to the IP address request message, where the response information includes the IP address assigned to the micro base station. The receiving unit 830 is configured to: receive the response information, and obtain the IP address from the response information.

Optionally, in another embodiment of this application, the obtaining unit 810 may alternatively obtain the IP address of the micro base station controller by using a secure digital SD card.

Specifically, before obtaining the IP address of the micro base station controller from the SD card, the obtaining unit 810 needs to perform a configuration on the SD card and store IP addresses of all micro base station controllers of an enterprise.

Optionally, in another embodiment of this application, the receiving unit 830 is further configured to receive the resource request message sent by the terminal.

According to the micro base station provided in this application, the micro base station and the micro base station controller are deployed by using an enterprise network to implement a wireless network connection. This reduces construction costs of an intra-enterprise network and improves wireless communication quality.

It should be noted that, in this embodiment of this application, the micro base station 800 may be the micro base station 150 in FIG. 1, the units 810 and 820 of the micro base station 800 may specifically implement S410, S420, S430, and S440 in the method 400 shown in FIG. 5. For brevity of description, details are not described herein again.

FIG. 12 is a schematic structural diagram of a micro base station controller according to an embodiment of this application. As shown in FIG. 12, the micro base station controller is deployed in an enterprise, and is connected to an Ethernet. The micro base station controller 900 includes a receiving unit 910 and a sending unit 920, where
the receiving unit 910 is configured to receive a resource request message sent by a micro base station, where the resource request message includes a destination address of a requested resource and an IP address of the micro base station;
the sending unit 920 is configured to forward the resource request message to a server corresponding to the destination address, so that the server corresponding to the destination address sends, to the micro base station controller according to the resource request message, resource information required in the resource request message;
the receiving unit 910 is further configured to receive the resource information; and
the sending unit 920 is further configured to send the resource information to the micro base station.

Specifically, when a terminal of the enterprise needs to obtain a resource by using the micro base station, the terminal sends the resource request message to the micro base station. The resource request message is processed by the micro base station and then sent to the micro base station controller. After obtaining the information sent by the micro base station, the micro base station sends, according to a destination address of a requested resource included in the information, the resource request message to a destination server corresponding to the destination address, so that the destination server can obtain the resource information of the requested resource according to the resource request message, and return the resource information to the micro base station controller sending the resource request message. After receiving the resource information, the micro base station controller returns the resource information to the micro base station that requests the resource information, so that the micro base station returns the resource information to the terminal.

According to the micro base station controller provided in this application, a wireless network is established by using an intra-enterprise network, reducing construction costs of the intra-enterprise network and improving wireless network quality.

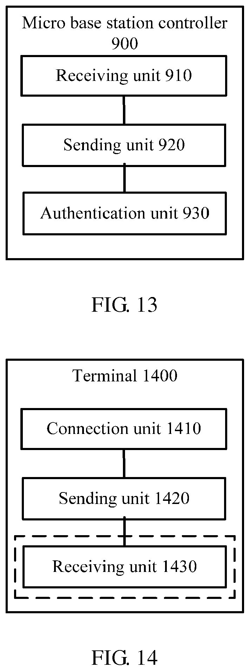

Optionally, in another embodiment of this application, as shown in FIG. 13, the micro base station controller further includes an authentication unit 930, where
the receiving unit 910 is further configured to receive a connection request sent by the micro base station, where the connection request includes an IP address of the micro base station; and the authentication unit 930 is configured to perform, according to the IP address in the connection request, authentication on the micro base station sending the connection request.

Specifically, before the micro base station communicates with the micro base station controller, a connection needs to be established. The micro base station needs to receive the connection request of the micro base station for establishing the network connection, and performs authentication according to the IP address of the micro base station included in the connection request for the network connection. A process of the authentication can be implemented by using IPSec. After the authentication succeeds, the micro base station controller returns, to the micro base station requesting the network connection, the response information that the connection succeeds, to establish the network connection between the micro base station and the micro base station controller, and control communication between the micro base station and the micro base station controller to be valid, enhancing communication security.

According to the micro base station controller provided in this application, a wireless network is established by using an intra-enterprise network, reducing construction costs of the intra-enterprise network and improving wireless network quality.

It should be noted that, in this embodiment of this application, the micro base station controller 900 may be the micro base station 160 in FIG. 1, the units 910 and 920 of the micro base station controller 900 may specifically implement S510, S520, S530, and S540 in the method 500 shown in FIG. 6. For brevity of description, details are not described herein again.

FIG. 14 is a schematic structural diagram of a terminal according to another embodiment of this application. The terminal shown in FIG. 14 is a device that can perform a wireless connection. The terminal 1400 includes a connection unit 1410 and a sending unit 1420, where
the connection unit 1410 is configured to establish a communication connection to a micro base station; and
the sending unit 1420 is configured to send a first resource request message to the micro base station when resource information needs to be obtained, so that the micro base station forwards the first resource request message to a micro base station controller.

Specifically, in this embodiment of this application, the terminal may be a device that performs wireless communication by using the micro base station, for example, a mobile phone, a tablet computer, and another device that can perform wireless communication. Before obtaining the resource information, the terminal establishes the communication connection to the micro base station.

In another embodiment, the connection unit 1410 may establish the communication connection to the micro base station by using a radio resource control protocol (Radio Resource Control, RRC).

A process of establishing the communication connection is as follows: The sending unit 1420 sends a connection request, such as an RRC connection request, to the micro base station, so that after receiving the connection request, the micro base station allocates corresponding radio resource information to the terminal according to information, such as an identifier of the terminal and a reason for requesting the connection, included in the connection request, where the resource information may be information for performing a related communication connection, such as channel resource information; and sends the allocated radio resource information to the terminal according to the identifier of the terminal.

In another embodiment, as shown in FIG. 14, the terminal 1400 further includes a receiving unit 1430. After receiving the radio resource information, the receiving unit 1430 establishes the communication connection to the micro base station according to a channel in the radio resource information.

When the terminal needs to request the resource information, the sending unit 1420 sends the resource request message to the micro base station by using the established communication connection, where the resource request message includes an IP address of the terminal and a destination address of a requested resource, so that after receiving the resource request message, the micro base station forwards the resource request message to the base station controller, to further obtain, from the server corresponding to the destination address, the resource information required in the resource request.

According to the micro base station controller provided in this application, a wireless network is established by using an intra-enterprise network, reducing construction costs of the intra-enterprise network and improving wireless network quality.

It should be noted that, in this embodiment of this application, the terminal 1400 may be the terminal 110 in FIG. 1 that performs a wireless connection, the units 1410 and 1420 of the terminal 1400 may specifically implement S610 and S620 in the method 600 shown in FIG. 8. For brevity of description, details are not described herein again.

In the several embodiments provided in this application, it should be understood that the disclosed system, apparatus, and method may be implemented in other manners. For example, the described apparatus embodiment is merely an example of an embodiment. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms. The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention. In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any modification or replacement figured out by a person of ordinary skill in the art within the technical scope disclosed in the present invention shall fall within the protection scope of the present invention. Therefore, the protection scope of the present invention shall be subject to the protection scope of the claims.

## Claims

1. A communication method, wherein the method comprises:
connecting, by a micro base station (150), to an intra-enterprise Ethernet using a switch (120) and a border router (140) wherein the intra-enterprise Ethernet comprises the switch (120), the border router (140), a proxy server, and a micro base station controller (160) deployed near the border router (140) at an enterprise egress, wherein the micro base station controller (160) is externally connected to a core network, and obtaining (410, S705, S710) an Internet Protocol, IP, address of the micro base station (150);
obtaining (420, S705, S710), by the micro base station (150), an IP address of the micro base station controller (160);
sending (430, S715, by the micro base station, a connection request to the micro base station controller (160) according to the obtained IP address of the micro base station controller (160), wherein the connection request comprises the IP address of the micro base station (150), so that the micro base station controller (160) connects to the micro base station (150) according to the connection request; and
sending (440, S730), by the micro base station (150), a first resource request message to the micro base station controller (160), wherein the first resource request message comprises a first destination address of a requested resource, so that the micro base station controller (160) forwards the first resource request message to a server corresponding to the first destination address.

2. The method according to claim 1, wherein the obtaining (S705), by the micro base station (150), an IP address of a micro base station (150) comprises: obtaining the IP address of the micro base station (150) by using a Dynamic Host Configuration Protocol, DHCP.

3. The method according to claim 2, wherein the obtaining the IP address of the micro base station (150) by using a DHCP comprises:
sending, by the micro base station (150), an IP address request message to a DHCP server, so that the DHCP server returns response information to the micro base station (150) according to the IP address request message, wherein the response information comprises the IP address assigned to the micro base station (150); and
receiving, by the micro base station (150), the response information, and obtaining the IP address from the response information.

4. The method according to any one of claims 2 to 3, wherein the obtaining, by the micro base station (150), an IP address of a micro base station controller (160) comprises: obtaining the IP address of the micro base station controller (160) from the DHCP server.

5. The method according to any one of claims 1 to 3, wherein the obtaining, by the micro base station (150), an IP address of a micro base station controller (160) comprises: obtaining the IP address of the micro base station controller (160) from a secure digital, SD, card.

6. The method according to claim 1, wherein before the sending, by the micro base station (150), a first resource request message to the micro base station controller (160), the method further comprises: receiving, by the micro base station (150), the first resource request message sent by the first terminal (110).

7. A micro base station (150), wherein the micro base station (150) is connected to an intra-enterprise Ethernet by means of a switch (120) and a border router (140) wherein the intra-enterprise Ethernet comprises the switch (120), the border router (140), a proxy server, and a micro base station controller (160) deployed near the border router (140) at an enterprise egress, wherein the micro base station controller (160) is externally connected to a core network, and the micro base station (150) comprises:
an obtaining unit, configured to obtain an Internet Protocol, IP, address of the micro base station (150), wherein
the obtaining unit is further configured to obtain an IP address of the micro base station controller (160); and
a sending unit, configured to send a connection request to the micro base station controller (160) according to the obtained IP address of the micro base station controller (160), wherein the connection request comprises the IP address of the micro base station (150), so that the micro base station controller (160) connects to the micro base station (150) according to the connection request, wherein
the sending unit is further configured to send a first resource request message to the micro base station controller (160), wherein the first resource request message comprises a first destination address of a requested resource, so that the micro base station controller (160) forwards the first resource request message to a server corresponding to the first destination address.

8. The micro base station according to claim 6, wherein the obtaining unit is specifically configured to obtain the IP address of the micro base station (150) by using a Dynamic Host Configuration Protocol, DHCP.

9. The micro base station according to claim 8, wherein the micro base station (150) further comprises a receiving unit, wherein
the obtaining unit is specifically configured to send an IP address request message to a DHCP server, so that the DHCP server returns response information to the micro base station (150) according to the IP address request message, wherein the response information comprises the IP address assigned to the micro base station (150); and
the receiving unit is configured to: receive the response information, and obtain the IP address from the response information.

10. The micro base station according to any one of claims 7 to 9, wherein the obtaining unit is specifically further configured to obtain the IP address of the micro base station controller (160) from the DHCP server.

11. The micro base station according to any one of claims 7 to 9, wherein the obtaining unit is specifically further configured to obtain the IP address of the micro base station controller (160) from a secure digital, SD, card.

12. The micro base station according to claim 7, wherein the receiving unit is further configured to receive the first resource request message sent by the first terminal (110).

## Patentansprüche

1. Kommunikationsverfahren, wobei das Verfahren Folgendes umfasst:
Herstellen einer Verbindung, durch eine Mikrobasisstation (150), zu einem unternehmensinternen Ethernet unter Verwendung eines Switch (120) und eines Border-Routers (140), wobei das unternehmensinterne Ethernet den Switch (120), den Border-Router (140), einen Proxyserver und einen in der Nähe des Border-Routers (140) an einem Unternehmensausgang bereitgestellten Mikrobasisstations-Controller (160) umfasst, wobei der Mikrobasisstations-Controller (160) nach außen mit einem Kernnetz verbunden ist, und Erhalten (410, S705, S710) einer Internetprotokoll(IP)-Adresse der Mikrobasisstation (150);
Erhalten (420, S705, S710), durch die Mikrobasisstation (150), einer IP-Adresse des Mikrobasisstations-Controllers (160);
Senden (430, S715), durch die Mikrobasisstation, einer Verbindungsanforderung zu dem Mikrobasisstations-Controller (160) gemäß der erhaltenen IP-Adresse des Mikrobasisstations-Controllers (160), wobei die Verbindungsanforderung die IP-Adresse der Mikrobasisstation (150) umfasst, sodass der Mikrobasisstations-Controller (160) eine Verbindung zu der Mikrobasisstation (150) gemäß der Verbindungsanforderung herstellt; und
Senden (440, S730), durch die Mikrobasisstation (150), einer ersten Ressourcenanforderungsnachricht zu dem Mikrobasisstations-Controller (160), wobei die erste Ressourcenanforderungsnachricht eine erste Zieladresse einer angeforderten Ressource umfasst, sodass der Mikrobasisstations-Controller (160) die erste Ressourcenanforderungsnachricht zu einem Server entsprechend der ersten Zieladresse weiterleitet.

2. Verfahren nach Anspruch 1, wobei das Erhalten (S705), durch die Mikrobasisstation (150), einer IP-Adresse einer Mikrobasisstation (150) Folgendes umfasst: Erhalten der IP-Adresse der Mikrobasisstation (150) durch Verwenden eines "Dynamic Host Configuration Protocol" (DHCP).

3. Verfahren nach Anspruch 2, wobei das Erhalten der IP-Adresse der Mikrobasisstation (150) durch Verwenden eines DHCP Folgendes umfasst:
Senden, durch die Mikrobasisstation (150), einer IP-Adressen-Anforderungsnachricht zu einem DHCP-Server, sodass der DHCP-Server Antwortinformationen an die Mikrobasisstation (150) gemäß der IP-Adressen-Anforderungsnachricht zurückgibt, wobei die Antwortinformationen die der Mikrobasisstation (150) zugewiesene IP-Adresse umfassen; und
Empfangen, durch die Mikrobasisstation (150), der Antwortinformationen, und Erhalten der IP-Adresse von den Antwortinformationen.

4. Verfahren nach einem der Ansprüche 2 bis 3, wobei das Erhalten, durch die Mikrobasisstation (150), einer IP-Adresse eines Mikrobasisstations-Controllers (160) Folgendes umfasst: Erhalten der IP-Adresse des Mikrobasisstations-Controllers (160) von dem DHCP-Server.

5. Verfahren nach einem der Ansprüche 1 bis 3, wobei das Erhalten, durch die Mikrobasisstation (150), einer IP-Adresse eines Mikrobasisstations-Controllers (160) Folgendes umfasst: Erhalten der IP-Adresse des Mikrobasisstations-Controllers (160) von einer "Secure-Digital"(SD)-Karte.

6. Verfahren nach Anspruch 1, wobei, vor dem Senden, durch die Mikrobasisstation (150), einer ersten Ressourcenanforderungsnachricht zu dem Mikrobasisstations-Controller (160) das Verfahren ferner Folgendes umfasst: Empfangen, durch die Mikrobasisstation (150), der durch das erste Endgerät (110) gesendeten ersten Ressourcenanforderungsnachricht.

7. Mikrobasisstation (150), wobei die Mikrobasisstation (150) mittels eines Switch (120) und eines Border-Routers (140) mit einem unternehmensinternen Ethernet verbunden ist, wobei das unternehmensinterne Ethernet den Switch (120), den Border-Router (140), einen Proxyserver und einen in der Nähe des Border-Routers (140) an einem Unternehmensausgang bereitgestellten Mikrobasisstations-Controller (160) umfasst, wobei der Mikrobasisstations-Controller (160) nach außen mit einem Kernnetz verbunden ist, und wobei die Mikrobasisstation (150) Folgendes umfasst:
eine Erhaltungseinheit, die dazu konfiguriert ist, eine Internetprotokoll(IP)-Adresse der Mikrobasisstation (150) zu erhalten, wobei
die Erhaltungseinheit ferner dazu konfiguriert ist, eine IP-Adresse des Mikrobasisstations-Controllers (160) zu erhalten; und
eine Sendeeinheit, die dazu konfiguriert ist, eine Verbindungsanforderung zu dem Mikrobasisstations-Controller (160) gemäß der erhaltenen IP-Adresse des Mikrobasisstations-Controllers (160) zu senden, wobei die Verbindungsanforderung die IP-Adresse der Mikrobasisstation (150) umfasst, sodass der Mikrobasisstations-Controller (160) eine Verbindung zu der Mikrobasisstation (150) gemäß der Verbindungsanforderung herstellt, wobei
die Sendeeinheit ferner dazu konfiguriert ist, eine erste Ressourcenanforderungsnachricht zu dem Mikrobasisstations-Controller (160) zu senden, wobei die erste Ressourcenanforderungsnachricht eine erste Zieladresse einer angeforderten Ressource umfasst, sodass der Mikrobasisstations-Controller (160) die erste Ressourcenanforderungsnachricht zu einem Server entsprechend der ersten Zieladresse weiterleitet.

8. Mikrobasisstation nach Anspruch 6, wobei die Erhaltungseinheit insbesondere dazu konfiguriert ist, die IP-Adresse der Mikrobasisstation (150) durch Verwenden eines "Dynamic Host Configuration Protocol" (DHCP) zu erhalten.

9. Mikrobasisstation nach Anspruch 8, wobei die Mikrobasisstation (150) ferner eine Empfangseinheit umfasst, wobei
die Erhaltungseinheit insbesondere dazu konfiguriert ist, eine IP-Adressen-Anforderungsnachricht zu einem DHCP-Server zu senden, sodass der DHCP-Server Antwortinformationen an die Mikrobasisstation (150) gemäß der IP-Adressen-Anforderungsnachricht zurückgibt, wobei die Antwortinformationen die der Mikrobasisstation (150) zugewiesene IP-Adresse umfassen; und
die Empfangseinheit zu Folgendem konfiguriert ist: Empfangen der Antwortinformationen und Erhalten der IP-Adresse von den Antwortinformationen.

10. Mikrobasisstation nach einem der Ansprüche 7 bis 9, wobei die Erhaltungseinheit ferner insbesondere dazu konfiguriert ist, die IP-Adresse des Mikrobasisstations-Controllers (160) von dem DHCP-Server zu erhalten.

11. Mikrobasisstation nach einem der Ansprüche 7 bis 9, wobei die Erhaltungseinheit ferner insbesondere dazu konfiguriert ist, die IP-Adresse des Mikrobasisstations-Controllers (160) von einer "Secure-Digital"(SD)-Karte zu erhalten.

12. Mikrobasisstation nach Anspruch 7, wobei die Empfangseinheit ferner dazu konfiguriert ist, die durch das erste Endgerät (110) gesendete erste Ressourcenanforderungsnachricht zu empfangen.

## Revendications

1. Procédé de communication, dans lequel le procédé consiste :
à être connecté, au moyen d'une micro-station de base (150), à un Ethernet intra-entreprise à l'aide d'un commutateur (120) et d'un routeur périphérique (140), dans lequel l'Ethernet intra-entreprise comprend le commutateur (120), le routeur périphérique (140), un serveur mandataire et un dispositif de commande de micro-station de base (160) déployé près du routeur périphérique (140) au niveau d'une sortie d'entreprise, dans lequel le dispositif de commande de micro-station de base (160) est connecté de manière externe à un réseau central, et à obtenir (410, S705, S710) une adresse de protocole Internet (IP) de la micro-station de base (150) ;
à obtenir (420, S705, S710), au moyen de la micro-station de base (150), une adresse IP du dispositif de commande de micro-station de base (160) ;
à envoyer (430, S715), au moyen de la micro-station de base, une demande de connexion au dispositif de commande de micro-station de base (160) en fonction de l'adresse IP obtenue du dispositif de commande de micro-station de base (160), dans lequel la demande de connexion comprend l'adresse IP de la micro-station de base (150) de telle sorte que le dispositif de commande de micro-station de base (160) se connecte à la micro-station de base (150) en fonction de la demande de connexion ; et
à envoyer (440, S730), au moyen de la micro-station de base (150), un premier message de demande de ressources au dispositif de commande de micro-station de base (160), dans lequel le premier message de demande de ressources comprend une première adresse de destination d'une ressource demandée de telle sorte que le dispositif de commande de micro-station de base (160) expédie le premier message de demande de ressources à un serveur correspondant à la première adresse de destination.

2. Procédé selon la revendication 1, dans lequel l'obtention (S705), par la micro-station de base (150), d'une adresse IP d'une micro-station de base (150) consiste : à obtenir l'adresse IP de la micro-station de base (150) en utilisant un protocole de configuration d'hôte dynamique (DHCP).

3. Procédé selon la revendication 2, dans lequel l'obtention de l'adresse IP de la micro-station de base (150) en utilisant un protocole DHCP consiste :
à envoyer, au moyen de la micro-station de base (150), un message de demande d'adresse IP à un serveur de protocole DHCP de telle sorte que le serveur de protocole DHCP renvoie des informations de réponse à la micro-station de base (150) en fonction du message de demande d'adresse IP, dans lequel les informations de réponse comportent l'adresse IP attribuée à la micro-station de base (150) ; et
à recevoir, au moyen de la micro-station de base (150), les informations de réponse et à obtenir l'adresse IP à partir des informations de réponse.

4. Procédé selon l'une quelconque des revendications 2 à 3, dans lequel l'obtention, par la micro-station de base (150), d'une adresse IP d'un dispositif de commande de micro-station de base (160) consiste : à obtenir l'adresse IP du dispositif de commande de micro-station de base (160) à partir du serveur de protocole DHCP.

5. Procédé selon l'une quelconque des revendications 1 à 3, dans lequel l'obtention, par la micro-station de base (150), d'une adresse IP d'un dispositif de commande de micro-station de base (160) consiste : à obtenir l'adresse IP du dispositif de commande de micro-station de base (160) à partir d'une carte numérique sécurisée (SD).

6. Procédé selon la revendication 1, dans lequel, avant l'envoi, par la micro-station de base (150), d'un premier message de demande de ressources au dispositif de commande de micro-station de base (160), le procédé consiste en outre : à recevoir, au moyen de la micro-station de base (150), le premier message de demande de ressources envoyé par le premier terminal (110).

7. Micro-station de base (150), dans laquelle la micro-station de base (150) est connectée à un Ethernet intra-entreprise au moyen d'un commutateur (120) et d'un routeur périphérique (140), dans laquelle l'Ethernet intra-entreprise comprend le commutateur (120), le routeur périphérique (140), un serveur mandataire et un dispositif de commande de micro-station de base (160) déployé près du routeur périphérique (140) au niveau d'une sortie d'entreprise, dans laquelle le dispositif de commande de micro-station de base (160) est connecté de manière externe à un réseau central, et la micro-station de base (150) comprend :
une unité d'obtention, configurée pour obtenir une adresse de protocole Internet (IP) de la micro-station de base (150), dans laquelle
l'unité d'obtention est en outre configurée pour obtenir une adresse IP du dispositif de commande de micro-station de base (160) ; et
une unité d'envoi, configurée pour envoyer une demande de connexion au dispositif de commande de micro-station de base (160) en fonction de l'adresse IP obtenue du dispositif de commande de micro-station de base (160), dans laquelle la demande de connexion comprend l'adresse IP de la micro-station de base (150) de telle sorte que le dispositif de commande de micro-station de base (160) se connecte à la micro-station de base (150) en fonction de la demande de connexion, dans laquelle
l'unité d'envoi est en outre configurée pour envoyer un premier message de demande de ressources au dispositif de commande de micro-station de base (160), dans laquelle le premier message de demande de ressources comprend une première adresse de destination d'une ressource demandée de telle sorte que le dispositif de commande de micro-station de base (160) expédie le premier message de demande de ressources à un serveur correspondant à la première adresse de destination.

8. Micro-station de base selon la revendication 6, dans laquelle l'unité d'obtention est spécialement configurée pour obtenir l'adresse IP de la micro-station de base (150) en utilisant un protocole de configuration d'hôte dynamique (DHCP).

9. Micro-station de base selon la revendication 8, dans laquelle la micro-station de base (150) comprend en outre une unité de réception, dans laquelle
l'unité d'obtention est spécialement configurée pour envoyer un message de demande d'adresse IP à un serveur de protocole DHCP de telle sorte que le serveur de protocole DHCP renvoie des informations de réponse à la micro-station de base (150) en fonction du message de demande d'adresse IP, dans laquelle les informations de réponse comportent l'adresse IP attribuée à la micro-station de base (150) ; et
l'unité de réception est configurée : pour recevoir les informations de réponse et pour obtenir l'adresse IP à partir des informations de réponse.

10. Micro-station de base selon l'une quelconque des revendications 7 à 9, dans laquelle l'unité d'obtention est en outre spécialement configurée pour obtenir l'adresse IP du dispositif de commande de micro-station de base (160) à partir du serveur de protocole DHCP.

11. Micro-station de base selon l'une quelconque des revendications 7 à 9, dans laquelle l'unité d'obtention est en outre spécialement configurée pour obtenir l'adresse IP du dispositif de commande de micro-station de base (160) à partir d'une carte numérique sécurisée (SD).

12. Micro-station de base selon la revendication 7, dans laquelle l'unité de réception est en outre configurée pour recevoir le premier message de demande de ressources envoyé par le premier terminal (110).
